# FASCICULE DE BREVET EUROPEEN

(11) **EP 3 748 183 B1**
(45) Date de publication et mention de la délivrance du brevet: **03.09.2025**
(21) Numéro de dépôt: 20176670.6
(22) Date de dépôt: 26.05.2020
(51) Int. Cl.: F16D 13/52

(54) **PROCEDE D'ASSEMBLAGE D'UN MODULE D'EMBRAYAGE D'UN VEHICULE ET MODULE D'EMBRAYAGE ASSEMBLE A PARTIR DE LA MISE EN OEUVRE D'UN TEL PROCEDE**
ZUSAMMENBAUVERFAHREN EINES KUPPLUNGSMODULS EINES FAHRZEUGS, UND DURCH UMSETZUNG DIESES VERFAHRENS ZUSAMMENGEBAUTES KUPPLUNGSMODUL
METHOD FOR ASSEMBLING A CLUTCH MODULE OF A VEHICLE AND CLUTCH MODULE ASSEMBLED BY IMPLEMENTING SUCH A METHOD

(30) Priorité: 07.06.2019 FR 1906130
(43) Date de publication de la demande: 09.12.2020
(73) Titulaire: VALEO EMBRAYAGES, 80009 Amiens (FR)
(72) Inventeur: WAETERLOOS, Anjouan, 95892 CERGY PONTOISE (FR); DOLE, Arnaud, 95892 CERGY PONTOISE (FR)
(74) Mandataire: Valeo Powertrain Systems

(56) Documents cités:
- EP-A1- 2 063 146
- WO-A1-2009/049724
- WO-A1-2018/024997
- DE-A1- 102009 017 760
- DE-A1- 102009 048 620
- DE-A1- 102013 223 770
- DE-A1- 102017 204 417
- FR-A1- 2 893 370
- US-A1- 2009 183 965

## Description

La présente invention concerne un procédé d'assemblage d'un module d'embrayage d'un véhicule. La présente invention concerne aussi un module d'embrayage assemblé à partir de la mise en œuvre d'un tel procédé.

On connait des modules d'embrayage comprenant un premier embrayage et un deuxième embrayage. Le premier embrayage est en rotation autour d'un axe de rotation, tandis que le deuxième embrayage est situé radialement à l'intérieur du premier embrayage. Le module d'embrayage comprend aussi des premiers éléments de pressage, tels que des pistons d'actionnement, permettant de générer un effort pour positionner respectivement le premier et le deuxième embrayage dans une configuration embrayée ou débrayée. L'effort généré au niveau de chaque piston est transmis axialement à l'embrayage correspondant pour déplacer axialement des premiers disques et des deuxièmes disques de l'embrayage correspondant contre des deuxièmes éléments de pressage, formant des butées axiales, afin de positionner les embrayages dans l'une ou l'autre des configurations citées.

Les premiers disques du premier embrayage sont couplés en rotation à un premier porte-disques d'entrée et les premiers disques du deuxième embrayage sont couplés en rotation à un deuxième porte-disques d'entrée. Les deux porte-disques d'entrée sont couplés en rotation à un arbre moteur par l'intermédiaire d'un moyeu d'entrée de couple, afin de transmettre un couple moteur à un arbre de transmission d'une boîte de vitesses, selon la configuration de chaque embrayage. À cet effet, les deuxièmes disques du premier embrayage sont couplés en rotation à un premier arbre de transmission et les deuxièmes disques du deuxième embrayage sont couplés en rotation à un deuxième arbre de transmission. Le couplage en rotation des éléments de friction de chaque embrayage est réalisé par des cannelures portées par chaque porte-disques d'entrée.

Le premier embrayage est destiné à être couplé en rotation au premier arbre de transmission par l'intermédiaire d'un premier porte-disques de sortie formant un élément de sortie du premier embrayage. De même, le deuxième embrayage est destiné à être couplé en rotation au deuxième arbre de transmission par l'intermédiaire d'un deuxième porte-disques de sortie formant un élément de sortie du deuxième embrayage.

D'une manière générale, il résulte de ces dispositions que le moyeu d'entrée de couple et l'un des moyeux de sortie de couple sont accouplés par un dispositif de transmission de couple qui comprend les éléments de pressage prévus pour être pressés ou non l'un contre l'autre afin d'associer ou de ne pas associer les éléments de friction entre eux, selon qu'une configuration embrayée ou débrayée est souhaitée. Ces éléments de pressage sont pressés l'un contre l'autre à parti d'un effort axial, parallèle à l'axe de rotation, qui permet d'accoupler ou de désaccoupler ces éléments entre eux. Il existe quelques exemples de tels embrayages décrits dans DE 10 2009 048620 A1, WO 2009/049724 A1, EP 2 063 146 A1, US 2009/183965 A1, DE 10 2009 017760 A1, DE 10 2013 223770 A1 et DE 10 2017 204417 A1.

Un problème général dans le domaine réside dans le fait que ces éléments de pressage sont susceptibles de comporter radialement entre eux des écarts de cotes axiales qui résultent de tolérances de fabrication et des procédés de fabrication de ces éléments de pressage. Ces écarts induisent par exemple des efforts de traînée lorsqu'une configuration débrayée est souhaitée, en raison d'un contact indu entre ces éléments de pressage et les disques de frictions. Ces écarts de cotes axiales provoquent par exemple encore un excès de pression lorsqu'une configuration embrayée est opérée.

Il en résulte finalement un échauffement préjudiciable de ces éléments et une usure prématurée du module d'embrayage.

La présente invention vient améliorer la situation en proposant un procédé d'assemblage d'un module d'embrayage qui positionne les éléments de pressage les uns par rapport aux autres en tenant compte de leurs caractéristiques dimensionnelles de manière à limiter l'effort de traînée. Ceci permet de pérenniser le module d'embrayage.

Un procédé de la présente invention est un procédé d'assemblage d'un module d'embrayage d'un véhicule, notamment automobile. Le module d'embrayage comprend au moins un moyeu d'entrée de couple, un moyeu de sortie de couple et au moins un dispositif de transmission destiné à accoupler le moyeu d'entrée de couple avec le moyeu de sortie de couple. Le dispositif de transmission comprend au moins deux composants choisis parmi un paquet de disques, un premier élément de pressage du paquet de disques ou un deuxième élément de pressage du paquet de disques, procédé au cours duquel, selon la présente invention :
- à une étape a), on détermine une position d'un point de débattement axial maximum du premier élément de pressage choisi parmi moins un des composants du dispositif de transmission et qui est un voile de transmission de couple qui forme une butée axiale en contact avec le paquet de disques quand un effort axial est exercé par le deuxième élément de pressage,
- à une étape b), on détermine une position d'un point de débattement axial maximum d'au moins un des autres composants du dispositif de transmission,
- à une étape c), on repère les points de débattement axiaux déterminés aux étapes a) et b),
- à une étape d), on assemble les composants du dispositif de transmission en positionnant le point de débattement axial maximum du composant du dispositif de transmission déterminé à l'étape a) par rapport au point de débattement axial maximum de l'autre composant du dispositif de transmission déterminé à l'étape b) de manière à appairer angulairement le dispositif de transmission.

Le procédé objet de l'invention peut comprendre l'une quelconque au moins des caractéristiques ou étapes suivantes, prises seules ou en combinaison :
- le module d'embrayage est indifféremment un module d'embrayage humide ou un module d'embrayage sec,
- le module d'embrayage est indifféremment un module d'embrayage à simple embrayage ou un module d'embrayage comportant un premier embrayage et un deuxième embrayage, au moins. On comprend ici que le procédé objet de l'invention s'applique à un module d'embrayage qui comprend au minimum plusieurs disques de friction formant un paquet de disques, un premier élément de pressage des disques ou un deuxième élément de pressage des disques distinct du premier élément de pressage.

L'invention trouve une application toute particulière à l'assemblage d'un module d'embrayage comprenant un double embrayage,
- le module d'embrayage est indifféremment un module d'embrayage axial ou radial apte à être mis en rotation autour d'un axe de rotation. Le premier embrayage et le deuxième embrayage peuvent ainsi être placés radialement l'un au-dessus de l'autre, mais il est également possible d'appliquer le procédé de l'invention à un module d'embrayage où le premier embrayage et le deuxième embrayage sont axialement l'un après l'autre,
- le module d'embrayage comprend au moins un premier élément de pressage, tel qu'un voile d'entrée ou analogue, pour presser contre un deuxième élément de pressage, tel qu'un piston d'actionnement, des disques de friction qui forment le paquet de disques,
- au cours de l'étape a) et de l'étape b), on mesure les débattements axiaux d'au moins deux composants du dispositif de transmission, par exemple les éléments de pressage, ou le premier élément de pressage et le paquet de disques ou encore le deuxième élément de pressage et le paquet de disques. La mesure de débattement axial est opérée par exemple avec un comparateur en appui contre une surface déterminée du composant en question,
- les débattements axiaux des composants sont mesurés entre deux surfaces distinctes de ce composant, l'une de ces surfaces étant une référence tandis que l'autre surface prend appui sur le composant immédiatement adjacent du dispositif de transmission. La surface de référence est par exemple une extrémité inférieure d'un voile d'entrée ou une portée d'extension radiale d'un piston d'actionnement, ou encore une épaisseur nominale du paquet de disques,
- les débattements axiaux de chacun des éléments de pressage sont mesurés entre une zone d'appui de l'élément de pressage sur le paquet de disques et un plan de référence de l'élément de pressage considéré,
- les débattements axiaux de chacun des éléments de pressage et du paquet de disques sont mesurés sur une zone circulaire,
- les débattements axiaux de chacun des éléments de pressage et du paquet de disques sont mesurés sur une même circonférence diamétrale,
- on identifie ensuite le débattement axial maximum, et éventuellement le débattement axial minimum de chacun des éléments de pressage, ainsi que le débattement axial maximum et éventuellement minimum du paquet de disques,
- au cours de l'étape c), on repère une position angulaire de chacun des points de débattements axiaux maximum des composants. Il peut être avantageux à ce stade de repérer également la position angulaire du point de débattement axial minimum de chaque composant. De préférence, on repère la position à l'aide d'un marquage de peinture, ou d'une marque par laser, ou d'une frappe à la presse.
- au cours de l'étape d), on oppose symétriquement par rapport à l'axe de rotation du module d'embrayage les points de débattements axiaux maximum.
- au cours de l'étape d), on applique le composant du dispositif de transmission de l'étape a) directement sur l'autre composant du dispositif de transmission de l'étape b). De cette manière, l'assemblage du module d'embrayage se fait sans adjonction de cale de réglage axiale additionnelle.

Le procédé comprend avantageusement l'une quelconque au moins des caractéristiques suivantes, prises seules ou en combinaison :
- à l'étape d), on positionne angulairement le point de débattement axial maximum du composant du dispositif de transmission déterminé à l'étape a) à l'opposé du point de débattement axial maximum de l'autre composant du dispositif de transmission déterminé à l'étape b) par rapport à un axe de rotation du module d'embrayage,
- à l'étape a) et à l'étape b), on détermine une position d'un point de débattement axial minimum du composant du dispositif de transmission considéré, et à l'étape d), on appaire angulairement le dispositif de transmission en positionnant les points de débattement axiaux minimums l'un par rapport à l'autre. L'appairage mentionné ici tient ainsi compte des débattements maximums axiaux, mais aussi optionnellement des débattements minimums axiaux d'au moins deux des composants du dispositif de transmission de couple, la position angulaire des composants l'un par rapport à l'autre étant alors dépendante de ces deux mesures de débattement. Il est ainsi possible que le débattement maximum d'un composant ne soit pas diamétralement opposé au débattement maximum de l'autre composant, en raison de la position des points de débattement axiaux minimum,

- au cours de l'étape c), on repère une position de chacun des points de débattements axiaux minimums de chacun des éléments de pressage,
- au cours de l'étape d), on dispose en vis-à-vis les points de débattements axiaux minimums.

Autrement dit, au cours de l'étape d), on assemble les composants du dispositif de transmission, par exemple les éléments de pressage et le paquet de disques, de manière à ce que les débattements axiaux préalablement identifiés soient disposés entre eux pour éviter la formation de contacts indus entre les éléments de pressage en position débrayée des embrayages, et pour éviter des efforts axiaux surdimensionnés en position embrayée des embrayages.

Au cours de l'étape c), on marque les composants du dispositif de transmission au niveau des points de débattements axiaux repérés, qu'ils soient maximums et/ou minimum, par exemple avec un repère tel qu'une trace, un poinçon, un adhésif ou analogue.

De manière avantageuse, le débattement axial est déterminé par une mesure prise entre une surface de référence du composant considéré et un point de contact du composant considéré sur le composant adjacent contre lequel il s'appuie.

La présente invention a aussi pour objet un module d'embrayage d'un véhicule destiné à accoupler un organe d'entrainement du véhicule avec une boîte de vitesses du véhicule et apte à être assemblé selon le procédé décrit précédemment. Le module d'embrayage comprend au moins un moyeu d'entrée de couple, un moyeu de sortie de couple et au moins un dispositif de transmission destiné à accoupler le moyeu d'entrée de couple avec le moyeu de sortie. Le dispositif de transmission comprend au moins deux composants choisis parmi un paquet de disques, un premier élément de pressage du paquet de disques ou un deuxième élément de pressage du paquet de disques. Au moins deux composants du dispositif de transmission comprennent chacun une marque et ces deux marques sont disposées l'une par rapport à l'autre de manière à appairer angulairement le dispositif de transmission.

Le module d'embrayage comprend avantageusement l'une quelconque au moins des caractéristiques techniques suivantes, prises seules ou en combinaison :
- le module d'embrayage comprend au moins un embrayage comportant au moins un paquet de disques axialement interposé entre le premier élément de pressage et le deuxième élément de pressage.
- selon une variante, le deuxième élément de pressage est un piston d'actionnement pourvu d'une pluralité de doigts en contact contre le paquet de disques. Un tel piston d'actionnement est configuré pour être mobile en translation le long de l'axe de rotation du module d'embrayage.
- le piston d'actionnement peut comprendre une portée d'extension radiale et des doigts d'appui sur le paquet de disques, les doigts étant formés depuis la périphérie externe de la portée d'extension radiale.
- selon une autre variante, le deuxième élément de pressage est un piston d'actionnement pourvu d'une couronne d'appui continue en contact contre le paquet de disques.
- le piston d'actionnement peut comprendre une portée d'extension radiale et une couronne d'appui sur le paquet de disques, la couronne d'appui étant formée depuis la périphérie externe de la portée d'extension radiale.
- avantageusement, le piston d'actionnement est réalisé à partir d'une tôle emboutie.
- le premier élément de pressage est un voile de transmission de couple qui forme une butée axiale en contact avec le paquet de disques quand un effort axial est exercé par le deuxième élément de pressage.
- le voile de transmission de couple peut être un voile d'entrée, ou un porte-disques d'entrée, ou un porte-disques de sortie.
- le voile de transmission de couple comprend des cannelures aptes à entrainer en rotation le paquet de disques.
- le premier élément de pressage est un flasque de reprise d'effort axial qui forme une butée axiale en contact avec le paquet de disques quand un effort axial est exercé par le deuxième élément de pressage.
- le premier élément de pressage et le deuxième élément de pressage sont liés en rotation au moyeu d'entrée de couple.
- le premier élément de pressage et le deuxième élément de pressage comprennent chacun une zone d'appui sur le paquet de disques et une surface de référence, la marque du premier élément de pressage et/ou du deuxième élément de pressage repérant un point de débattement axial maximal ou minimal mesuré entre la surface de référence et la zone d'appui.
- la zone d'appui du premier élément de pressage et la zone d'appui du deuxième élément de pressage sont circulaires et disposées sensiblement sur un même diamètre.

De manière avantageuse, au moins une des marques est ménagée sur le premier élément de pressage, tandis qu'au moins une autre des marques est ménagée sur le deuxième élément de pressage.

Au moins une des marques est ménagée sur le premier élément de pressage ou sur le deuxième élément de pressage et en ce qu'au moins une autre des marques est ménagée sur le paquet de disques.

De préférence, les deux marques des composants du dispositif de transmission peuvent être positionnées angulairement en opposition par rapport à l'axe de rotation du module d'embrayage, selon un angle de 180° compris dans une tolérance de plus ou moins 60° , de préférence dans une tolérance de plus ou moins 30°.

Le module d'embrayage peut comprendre un premier embrayage et un deuxième embrayage qui s'étend radialement au moins en partie à l'intérieur du premier embrayage, le premier embrayage et le deuxième embrayage comprenant chacun au moins le paquet de disques axialement interposé entre le premier élément de pressage et le deuxième élément de pressage.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
[Fig.1] est une représentation schématique partielle d'un module d'embrayage de la présente invention,
[Fig.2] est une représentation schématique du module d'embrayage illustré sur la figure 1,
[Fig.3] est une représentation schématique d'une étape de mesure mise en œuvre par le procédé objet de l'invention,
[Fig.4] est une vue de face du premier élément de pressage,
[Fig.5] est une vue de face du deuxième élément de pressage,
[Fig.6] est une vue de face du premier élément de pressage et du deuxième élément de pressage appairés selon le procédé objet de l'invention.

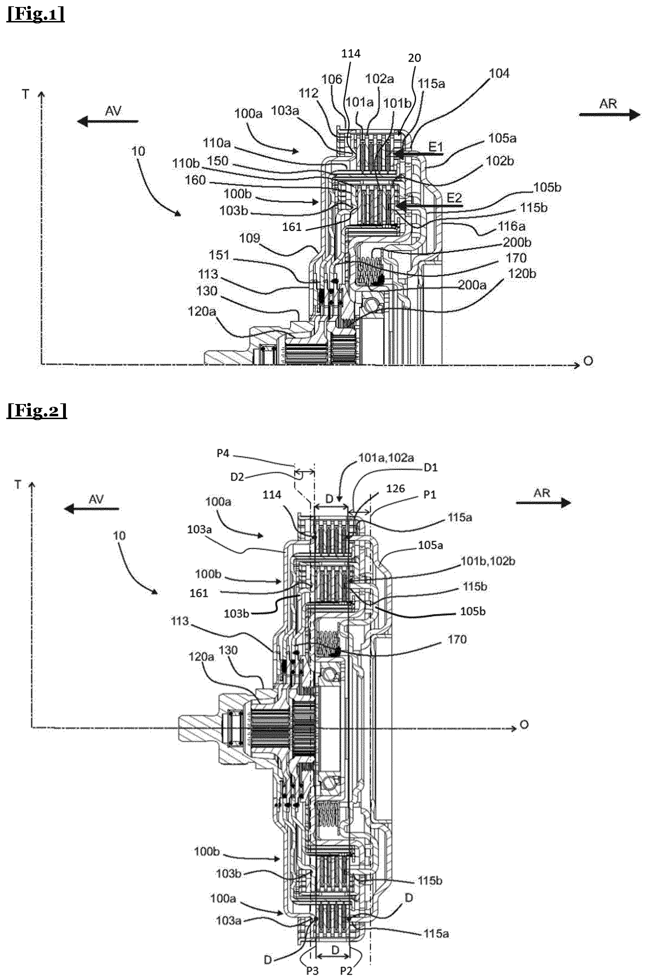

La figure 1 illustre un module d'embrayage 10 qui est obtenu à partir d'une mise en œuvre d'un procédé d'assemblage de la présente invention. Le module d'embrayage 10 illustré est un module d'embrayage humide à double embrayages radial. On note à ce stade de la description que le module d'embrayage 10 auquel il est possible d'appliquer le procédé d'assemblage de la présente invention est indifféremment un module d'embrayage humide ou sec, un module d'embrayage à simple embrayage ou double embrayage, un module d'embrayage radial ou axial. La description ci-dessous est fait à l'égard d'un module d'embrayage 10 humide à double embrayages radial, mais il est entendu que cette description est transposable à tout composant similaire d'un module d'embrayage par exemple à sec et comprenant un unique embrayage.

Le module d'embrayage 10 conforme à la présente invention comprend un dispositif de transmission 20 dans lequel est disposé au moins un embrayage, dans le cas présent un premier embrayage 100a et un deuxième embrayage 100b. Dans sa généralité, le module d'embrayage 10 est agencé pour pouvoir coupler en rotation un moyeu d'entrée de couple 130 à un premier arbre de transmission et à un deuxième arbre de transmission par l'intermédiaire respectivement du dispositif de transmission 20. Le moyeu d'entrée de couple 130 est entrainé en rotation directement ou indirectement par au moins un vilebrequin d'un moteur thermique et les premier et deuxième arbres de transmission font partie d'une transmission, telle que par exemple une boite de vitesses du type de celles équipant des véhicules automobiles à moteur thermique.

De préférence, le premier arbre de transmission et le deuxième arbre de transmission sont coaxiaux et ménagés selon un axe longitudinal, qui est confondu avec l'axe de rotation O du module d'embrayage 10. Plus particulièrement, le deuxième arbre de transmission prend éventuellement la forme d'un cylindre creux à l'intérieur duquel le premier arbre de transmission peut être inséré.

Le module d'embrayage 10 comprend au moins le moyeu d'entrée de couple 130, un ou deux moyeux de sortie de couple 120a, 120b et au moins le dispositif de transmission 20 intercalé, sur la chaîne de transmission des efforts, entre le moyeu d'entrée de couple 130 et l'un ou l'autre des moyeux de sortie de couple 120a, 120b.

Le dispositif de transmission 20 comprend le premier embrayage 100a et/ou le deuxième embrayage 100b, ce ou ces derniers comprenant au moins un paquet de disques 10 1a, 10 1b, 102a, 102b. Le dispositif de transmission 20 comprend également au moins un premier élément de pressage 103a, 103b, ainsi qu'un deuxième élément de pressage 105a, 105b.

Les éléments de pressage listés ci-dessus et le paquet de disques sont des composants du dispositif de transmission 20 et ce terme sera employé dans la suite de la description pour désigner indistinctement l'un quelconque des éléments de pressage ou le paquet de disques.

Les éléments de pressage 103a, 103b, 105a, 105b sont qualifiés ainsi en ce qu'ils contribuent à exercer une pression au moins axiale sur le paquet de disques 101a, 101b, 102a, 102b et toute pièce participant à la génération de cette pression axiale peut entrer dans le champ de définition de l'élément de pressage.

Le premier embrayage 100a et le deuxième embrayage 100b sont avantageusement du type multi-disques. Chaque embrayage multi-disques comprend au moins le paquet de disques 10 1a, 101b, 102a, 102b, dont une pluralité de premiers disques 10 1a, 101b sont liés en rotation au moyeu de sortie de couple 120a, et dont une pluralité de deuxièmes disques 102a, 102b sont liés en rotation à au moins le moyeu d'entrée de couple 130. Les premiers disques 101a, 101b sont par exemple formés d'éléments de friction. Les deuxièmes disques 102a, 102b, sont par exemple formés de flasques. Les paquets de disques 101a, 101b, 102a, 102b constituent un des composants du dispositif de transmission 20 et sont accouplés ou séparés les uns des autres, comme décrit ci-dessous, pour agencer en configuration embrayée ou débrayée le premier embrayage 100a et le deuxième embrayage 100b.

Le premier arbre de transmission est entraîné par le moyeu d'entrée de couple 130 en rotation lorsque le premier embrayage 100a est configuré dans une position dite embrayée pour laquelle la pluralité de premiers disques 10 la est couplée en rotation à la pluralité de deuxièmes disques 102a. Inversement, le premier arbre de transmission est découplé en rotation du moyeu d'entrée de couple 130 lorsque le premier embrayage 100a est configuré dans une position dite débrayée pour laquelle la pluralité de premiers disques 10 la est séparée en rotation à la pluralité de deuxièmes disques 102a.

De manière analogue, le deuxième arbre de transmission peut être couplé en rotation au moyeu d'entrée de couple 130. Dans un tel cas, le deuxième arbre de transmission est entraîné en rotation par le moyeu d'entrée de couple 130 lorsque le deuxième embrayage 100b est configuré dans une position embrayée pour laquelle la pluralité de premiers disques 101b est couplée en rotation à la pluralité de deuxièmes disques 102b. Inversement, le deuxième arbre de transmission est découplé en rotation du moyeu d'entrée de couple 130 lorsque le deuxième embrayage 100b est configuré dans une position dite débrayée, pour laquelle la pluralité de premiers disques 101b est séparée en rotation de la pluralité de deuxièmes disques 102b.

Le premier embrayage 100a et le deuxième embrayage 100b sont agencés pour transmettre alternativement une puissance dite d'entrée - un couple et une vitesse de rotation - du moyeu d'entrée de couple 130 à l'un des moyeux de sortie de couple 120a, 120b, en fonction de la configuration respective de chaque embrayage 100a et 100b.

Le premier embrayage 100a et le deuxième embrayage 100b sont agencés pour ne pas être simultanément dans la même configuration embrayée. En revanche, le premier embrayage 100a et le deuxième embrayage 100b peuvent simultanément être configurés dans leur position débrayée.

Le premier élément de pressage 103a du premier embrayage 100a prend la forme d'un voile d'entrée 109. Ce dernier est solidairement lié en rotation avec le moyeu d'entrée de couple 130.

Le premier élément de pressage 103b du deuxième embrayage 100b prend la forme d'un flasque 160 de reprise d'effort axial lié en rotation avec un porte-disques d'entrée 106, lui-même entrainé en rotation par le voile d'entrée 109.

Le voile d'entrée 109 comporte une extrémité radialement extérieure 112 par laquelle le voile d'entrée 109 est lié en rotation au premier embrayage 100a. Cette liaison est réalisée par l'intermédiaire du porte-disques d'entrée 106, le porte-disques d'entrée 106 étant lié en rotation au voile d'entrée 109, par exemple par coopération de formes, notamment par des cannelures. Alternativement, le porte-disques d'entrée 106 et le voile d'entrée 109 sont liés en rotation par l'intermédiaire de tout moyen de liaison analogue.

Le voile d'entrée 109 comporte aussi une extrémité radialement intérieure 113 par laquelle le voile d'entrée 109 est lié au moyeu d'entrée de couple 130.

Le premier embrayage 100a et le deuxième embrayage 100b sont chacun commandés par des deuxièmes éléments de pressage 105a, 105b qui sont aptes à exercer une pression axiale sur les paquets de disques 10 la, 101b, 102a, 102b, pour plaquer ces derniers contre les premiers éléments de pressage 103a, 103b.

Les deuxièmes éléments de pressage 105a, 105b prennent par exemple la forme de pistons mobiles axialement. Les premiers éléments de pressage 103a, 103b sont constitués de moyens de réaction formant des butées fixes. Chaque deuxième élément de pressage 105a, 105b est agencé pour pouvoir configurer le premier embrayage 100a et le deuxième embrayage 100b dans une configuration quelconque comprise entre la configuration embrayée et la configuration débrayée.

L'un des deuxièmes éléments de pressage référencé, ci-après appelé premier piston d'actionnement 105a ou premier piston, est apte à actionner le premier embrayage 100a. D'une manière générale, le premier piston 105a est agencé pour transmettre un premier effort axial E1, exercé parallèlement à l'axe de rotation O, au premier embrayage 100a. Le premier piston 105a comprend une pluralité de premiers doigts 115a qui s'étendent axialement vers l'avant AV pour pouvoir presser les premiers disques 10 la contre les deuxièmes disques 102a par mise en pression contre le premier élément de pressage 103a, formé ici pour l'exemple par le voile d'entrée 109. Lorsque les premiers disques 10 la sont écartés des deuxièmes disques 102a, alors le premier embrayage 100a est placé dans sa configuration débrayée. En revanche, lorsque les premiers disques 10 la sont pressés contre les deuxièmes disques 102a, alors le premier embrayage 100a est placé dans sa configuration embrayée.

Le premier piston 105a prend la forme d'une tôle emboutie et est incurvée axialement vers l'avant AV à son extrémité radiale extérieure. Les premiers doigts 115a s'étendent parallèlement à l'axe de rotation O vers l'avant AV et passent au travers d'une pluralité d'ouvertures 104 aménagée à travers le porte-disques d'entrée 106.

Le premier piston 105a comprend une portée d'extension radiale 116a qui relie les doigts 115a à une portion configurée pour interagir avec un organe de commande du module d'embrayage, par exemple une butée hydraulique. La portée d'extension radiale 116a s'étend parallèlement à un axe transversal T.

Le premier élément de pressage 103a comprend un bossage 114 qui s'étend de manière périphérique tout autour de l'axe de rotation O. Ce bossage 114 est situé dans un prolongement axial du paquet de disques 101a, 102a du premier embrayage 100a, de manière à permettre un couplage par friction des premiers et deuxièmes disques 101a, 102a lorsque le premier piston 105a exerce le premier effort axial E1 vers l'avant AV pour configurer le premier embrayage 100a dans sa position embrayée. A contrario, lorsque le premier piston 105a est repoussé vers l'arrière AR, par exemple par des premiers éléments élastiques de rappel 200a, alors les premiers disques 10 la se séparent des deuxièmes disques 102a, permettant alors de désaccoupler lesdits éléments de friction et permettant ainsi de configurer le premier embrayage 100a dans sa configuration débrayée. Le bossage 114 est continu circonférentiellement. Le sommet du bossage 114 forme la zone d'appui du premier élément de pressage 103a. En variante non représentée, le bossage 114 peut être discontinu circonférentiellement et être formé par une pluralité de segments angulaires, les sommets des segments angulaires formant ainsi la zone d'appui du premier élément de pressage.

Le premier élément de pressage 103a présente notamment des cannelures extérieures qui coopèrent avec des cannelures intérieures correspondantes du porte-disques d'entrée 106.

Le premier embrayage 100a est destiné à être couplé en rotation au premier arbre de transmission par l'intermédiaire d'un premier porte-disques de sortie 110a formant un élément de sortie dudit premier embrayage 100a. Plus particulièrement, le premier porte-disques de sortie 110a est couplé en rotation aux premiers disques 10 la par l'intermédiaire d'une portée d'extension axiale 150 que le porte-disques de sortie 110a comprend. Plus particulièrement encore, le premier porte-disques de sortie 110a est couplé en rotation à un premier moyeu de sortie de couple 120a par l'intermédiaire d'une extrémité intérieure radiale 151 que le premier porte-disques de sortie 110a comprend.

L'extrémité intérieure radiale 151 est liée au premier moyeu de sortie de couple 120a. Ils sont par exemple fixés ensemble par soudage, par rivetage ou out tout procédé de liaison mécanique analogue. Sur une paroi intérieure, le premier moyeu de sortie de couple 120a comporte des cannelures axiales agencées pour coopérer avec des cannelures complémentaires situées sur le premier arbre de transmission.

Le deuxième embrayage 100b du module d'embrayage 10 est de conception similaire à celle du premier embrayage 100a, ce deuxième embrayage 100b étant disposé radialement à l'intérieur du premier embrayage 100a.

Le deuxième élément de pressage prend la forme d'un deuxième piston d'actionnement 105b apte à actionner le deuxième embrayage 100b. Le deuxième piston 105b est situé axialement entre le porte-disques d'entrée 106 et le premier piston 105a, et notamment à l'intérieur du premier piston 105a.

D'une manière générale, le deuxième piston 105b transmet un deuxième effort axial E2, exercé parallèlement à l'axe de rotation O, au deuxième embrayage 100b. Le deuxième piston 105b comprend une pluralité de deuxièmes doigts 115b qui s'étendent axialement vers l'avant AV pour pouvoir presser les premiers disques 101b contre les deuxièmes disques 102b d'une part, et contre le premier élément de pressage 103b du deuxième embrayage 100b, d'autre part. Lorsque les premiers disques 101b sont écartés des deuxièmes disques 102b, alors le deuxième embrayage 100b est configuré dans sa configuration débrayée. En revanche, lorsque les premiers disques 101b sont pressés contre les deuxièmes disques 102b, alors le deuxième embrayage 100b est configuré dans sa configuration embrayée.

Dans l'exemple de mise en œuvre présenté sur la figure 1, les pistons d'actionnement 105a, 105b sont déplacés à l'aide d'un organe de commande hydraulique (non représenté) distinct du module d'embrayage 10. En variante, les pistons d'actionnement 105a, 105b peuvent être déplacés par de l'huile sous pression disposée dans des chambres de pression séparées et intégrées dans le module d'embrayage.

Le premier élément de pressage 103b du deuxième embrayage 100b prend la forme d'un flasque 160 qui comprend un bossage 161 qui, vue de face, forme un anneau autour de l'axe de rotation O. Le sommet du bossage 161 forme la zone d'appui du premier élément de pressage 103b. Le flasque 160 est situé en avant et dans un prolongement axial du paquet de disques 101b, 102b du deuxième embrayage 100b, de manière à permettre un couplage par friction des premiers et deuxièmes disques 101b, 102b lorsque le deuxième piston 105b exerce le deuxième effort axial E2 vers l'avant AV pour configurer le deuxième embrayage 100b dans sa position embrayée. A contrario, lorsque le deuxième piston 105b est repoussé vers l'arrière AR, par exemple par des deuxièmes éléments élastiques de rappel 200b, alors les premiers disques 101b se séparent des deuxièmes disques 102b, permettant alors de découpler lesdits éléments de friction et permettant ainsi de configurer le deuxième embrayage 100b dans sa configuration débrayée.

Le deuxième embrayage 100b est destiné à être couplé en rotation au deuxième arbre de transmission par l'intermédiaire du deuxième porte-disques de sortie 170. Plus particulièrement, le deuxième porte-disques de sortie 170 est couplé en rotation aux premiers disques 101b par des formes complémentaires entre les disques 101b et le deuxième porte-disques de sortie 170. Ce deuxième porte-disques de sortie 170 est couplé en rotation au deuxième moyeu de sortie de couple 120b par l'intermédiaire d'une extrémité intérieure radiale du deuxième porte-disques de sortie 170.

Le deuxième moyeu de sortie de couple 120b comporte sur sa paroi interne des cannelures axiales agencées pour coopérer avec des cannelures complémentaires situées sur le deuxième arbre de transmission.

En raison des tolérances de fabrication respectives des composants du dispositif de transmission 20, à savoir celles afférentes aux paquets de disques 101a, 101b, 102a, 102b, celles affectant les premiers éléments de pressage 103a, 103b et celles afférentes aux deuxièmes éléments de pressage 105a, 105b, il est possible d'observer des débattements axiaux de chacun de ces composants. Le débattement axial évoqué ici est une distance mesurée parallèlement à l'axe de rotation O entre un plan de référence de la pièce concernée et une zone d'appui de cette pièce sur le composant adjacent du module d'embrayage.

En se reportant sur la figure 2, on comprend que les composants du dispositif de transmission 20 sont susceptibles de présenter chacun, au niveau de leur point de contact sur la pièce adjacente, des débattements axiaux illustrés par la distance D mesurée.

En ce qui concerne les premiers éléments de pressage 103a, 103b, le point de contact est une ligne formée sur le bossage 114, 161et contre laquelle le paquet de disques 101a, 102a, 101b, 102b prend appui.

En ce qui concerne les deuxièmes éléments de pressage 105a, 105b, le point de contact est une bande formée à une extrémité radiale de la pluralité de doigts 115a, 115b, cette extrémité radiale venant en appui contre le paquet de disques 101a, 102a, 101b, 102b.

En ce qui concerne le paquet de disques 101a, 102a, 101b, 102b, le point de contact est un cercle formé sur des deuxième disques 102a, 102b situés aux extrémités axiales du paquet de disques concernés.

De préférence, le point de contact du premier élément de pressage 103a, 103b, le point de contact du deuxième élément de pressage 105a, 105b et le point de contact du paquet de disques 10 1a, 102a, 101b, 102b sont disposés radialement sur un cercle sensiblement de même diamètre.

Ces débattements axiaux varient selon la position angulaire où est effectuée la mesure sur le composant. Le débattement d'un composant est ainsi mesuré entre un plan orthogonal à l'axe de rotation O passant par une face de référence du composant et un plan passant par le point de contact du composant sur son composant adjacent. La figure 2 illustre cette méthode de mesure à l'égard du deuxième élément de pressage 105a, où un plan de référence P1 passe par une face du deuxième élément de pressage 105a contre laquelle repose un organe de commande du deuxième élément de pressage 105a. Le plan de débattement P2 passe par les extrémités libres de la pluralité de doigts 115a et c'est la variation de cette distance D1qui détermine le débattement axial maximum et minimum.

Le débattement axial du paquet de disques 101a, 102a est illustré par la distance D mesurée entre deux plans P2 et P3 orthogonaux à l'axe de rotation O et passant par une face extérieure de chaque deuxième disques 102a qui borde axialement le paquet de disques 101a, 102a.

En ce qui concerne le premier élément de pressage 103a, son débattement axial est illustré par une distance D2 mesurée entre le plan de débattement P3 passant par le point de contact du bossage 114 sur le paquet de disques 10 1a, 102a et un plan de référence P4 où le premier élément de pressage 103a est en butée axial contre le premier porte-disques d'entrée 106, notamment via un anneau élastique qui bloque axialement le premier élément de pressage 103 par rapport au premier porte-disques d'entrée 106.

Il en va de même pour les autres composants à appairer du deuxième embrayage 100b où il convient de déterminer leur débattement axial.

Les débattements axiaux D, D1 ou D2 sont par exemple mesurés à l'aide d'un comparateur ou d'un instrument de mesure analogue.

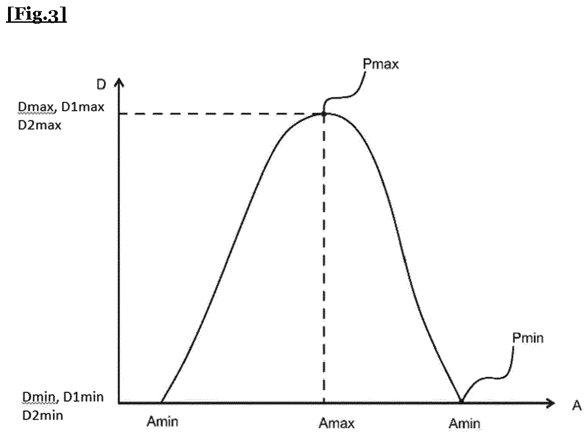

En se reportant sur la figure 3, on identifie pour les éléments de pressage 103a, 103b, 105a, 105b et pour le paquet de disques 101a, 101b, 102a, 102b, un point de débattement maximal Pmax qui illustre un débattement maximal Dmax situé à un angle Amax du composant, mesuré autour de l'axe de rotation O.

La figure 3 illustre aussi un point de débattement minimal Pmin, situé à un angle Amin, qui illustre un débattement minimal Dmin du point de contact des éléments de pressage 103a, 103b, 105a, 105b entre eux ou d'un ou deux éléments de pressage vis-à-vis du paquet de disques 101a, 101b, 102a, 102b.

A une étape du procédé objet de l'invention, on détermine ces points de débattement Pmax, Pmin à l'aide du comparateur, puis on les repère au moyen d'un identifiant, tel qu'une encoche, un poinçon, un marquage par laser, un adhésif ou analogue, pour au moins deux des composants du dispositif de transmission.

Ainsi, les paquets de disques 101a, 101b, 102a, 102b sont susceptibles de présenter radialement entre eux un premier débattement axial maximum Dmax et un premier débattement axial minimum Dmin. De même, les premiers éléments de pressage 103a, 103b sont susceptibles de présenter radialement entre eux un deuxième débattement axial maximum D2max et un deuxième débattement axial minimum D2min. De même encore, les deuxièmes éléments de pressage 105a, 105b sont susceptibles de présenter radialement entre eux un troisième débattement axial maximum Dlmax et un deuxième débattement axial minimum D1min.

La présente invention propose d'appairer angulairement les débattements axiaux d'au moins deux des composants du dispositif de transmission entre eux, c'est-à-dire d'assembler ces composants de manière à ce que les débattements axiaux préalablement identifiés soient disposés entre eux pour éviter la formation de contacts indus entre les composants en position débrayée des embrayages 100a, 100b, et pour éviter des efforts axiaux E1, E2 surdimensionnés en position embrayée des embrayages 100a, 100b. On comprend qu'une telle opération d'appairage vise à compenser, voire neutraliser, des disparités de positionnement des éléments de pressage 103a, 103b, 105a, 105b entre eux, ou de l'un élément de pressage103a, 103b ou 105a, 105b par rapport au paquet de disques 101a, 101b, 102a, 102b, et ceci en raison des tolérances de fabrication et d'assemblage et des procédés de fabrication et d'assemblage de ces composants.

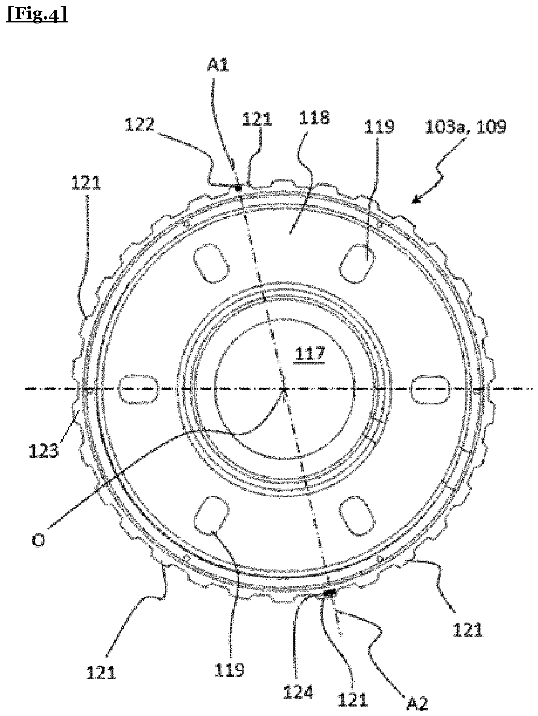

La figure 4 est une vue de face du premier élément de pressage 103a, ce dernier prenant ici la forme du voile d'entrée référencé 109. Ce premier élément de pressage 103a comprend une ouverture centrale 117 configurée pour recevoir le moyen d'entrée de couple, une portion d'extension radiale 118 pourvue de plusieurs orifice 119 et des dents d'engrènement 121 ménagées à la périphérie extérieure du voile d'entrée 109.

Une première marque 122, ici un point réalisé sur une partie radiale d'une dent d'engrènement 121, illustre une position angulaire du point de débattement axial maximum, par rapport à une surface de référence 123. La surface de référence 123 est une face latérale plane formant les dents d'engrènement 121 et correspond dans cet exemple au plan de référence P4. De manière alternative ou complémentaire, une deuxième marque 124, réalisée au même endroit mais sur une dent d'engrènement 121 opposée, montre une position angulaire du point de débattement axial minimum, par rapport à la surface de référence 123. La surface de référence 123 est disposée radialement à l'extérieur de la zone d'appui du premier élément de pressage.

La première marque 122 et l'axe de rotation O s'inscrivent dans une première droite A1. La deuxième marque 124 et l'axe de rotation O s'inscrivent dans une deuxième droite A2. Selon l'exemple illustré ici, la première droite A1 et la deuxième droite A2 sont confondues, mais l'invention couvre le cas où ces deux droites seraient non parallèles et sécantes, la première marque 121 et la deuxième marque 124 n'étant alors pas diamétralement opposées.

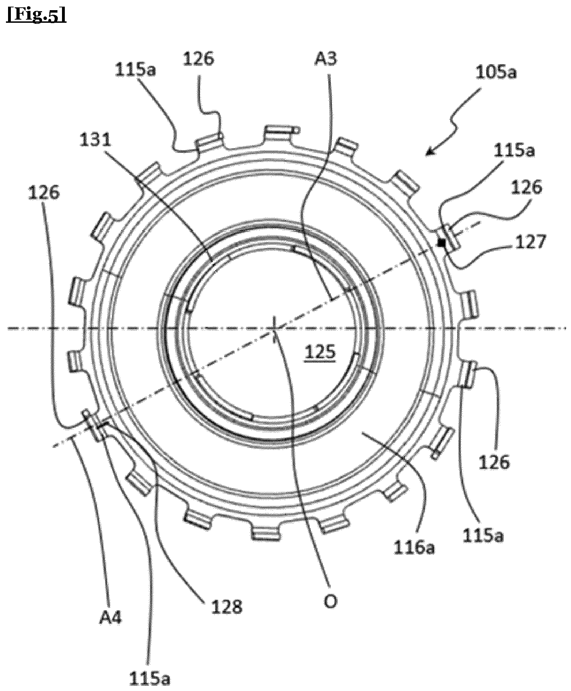

La figure 5 est une vue de face du deuxième élément de pressage, ce dernier prenant ici la forme du premier piston d'actionnement 105a. Ce deuxième élément de pressage 105a comprend un trou central 125 configuré pour recevoir un organe de commande du module d'embrayage, la portée d'extension radiale 116a et la pluralité de doigts 115a. les doigts 115a émergent d'une périphérie extérieure du premier piston 105a et s'étendent axialement. Chaque extrémité libre des doigts 115a est terminée par une face de contact 126 qui prend appui contre le paquet de disques. Les faces de contact 126 forment la zone d'appui sur le paquet de disques et sont inscrites dans le plan de débattement P2. Dans cet exemple, le plan de référence P1perpendiculaire à l'axe O passe par la surface de référence 131 contre laquelle repose un organe de commande du deuxième élément de pressage 105a. La surface de référence 131 est disposée radialement à l'intérieur de la zone d'appui 126 du deuxième élément de pressage.

Une troisième marque 127, ici un poinçon de forme carré réalisé sur le doigt 115a, illustre une position angulaire du point de débattement axial maximum, par rapport à la surface de référence 123. De manière alternative ou complémentaire, une quatrième marque 128, ici un trait réalisé sur une face interne du doigt 115a, montre une position angulaire du point de débattement axial minimum, par rapport à la surface de référence 123.

La troisième marque 127 et l'axe de rotation O s'inscrivent dans une troisième droite A3. La quatrième marque 128 et l'axe de rotation O s'inscrivent dans une quatrième droite A4. Selon l'exemple illustré ici, la troisième droite A3 et la quatrième droite A4 sont confondues, mais l'invention couvre le cas où ces deux droites seraient non parallèles et sécantes, la troisième marque 127 et la quatrième marque 128 n'étant alors pas diamétralement opposées.

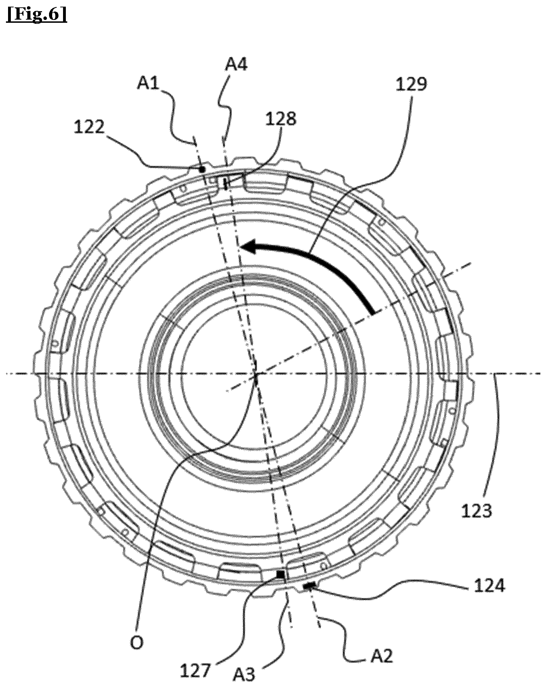

La figure 6 montre l'appairage angulaire du premier élément de pressage 103a de la figure 4 avec le deuxième élément de pressage 105a de la figure 5. Ces deux composants sont ici superposés. Le procédé objet de l'invention propose d'appairer ces composants de manière à ce que les défauts axiaux de l'un soient compensés par l'autre.

Dans le cas présent, le premier élément de pressage 103a et le deuxième élément de pressage 105a sont tournés l'un par rapport à l'autre autour de l'ace de rotation O de manière à disposer la quatrième marque 128, correspondant au débattement axial minimum du deuxième élément de pressage 105a, au plus près de la première marque 122, cette dernière correspondant au débattement axial maximum constaté sur le premier élément de pressage 103a. La flèche 129 illustre la rotation autour de l'axe de rotation O qui est réalisée pour appairer le premier élément de pressage 103a avec le deuxième élément de pressage 105a.

De manière complémentaire, cet appairage angulaire peut être réalisé en tenant également compte de la position angulaire des deuxième et troisième marques 124, 127, ceux-ci n'étant pas nécessairement à l'opposé respectivement des première et quatrième marques 122, 128.

Aussi, la présente invention propose, selon une première option, de disposer de manière diamétralement opposés deux des points de débattements axiaux maximums ou minimums identifiés, soit, selon une deuxième option, de prendre en considération simultanément les points de débattement minimums et maximums de deux composants et de les appairer de manière à ce que l'effort de trainée soit le mieux maitrisé.

Ces deux options étant réalisés pour n'importe quel couple des composants du dispositif de transmission, dont par exemple un premier couple formé du paquet de disques 101a, 101b, 102a, 102b et de l'un des premiers éléments de pressage 103a, 103b, ou bien un deuxième couple formé du paquet de disques 101a, 101b**,** 102a, 102b et de l'un des deuxièmes éléments de pressage 105a, 105b, ou bien un troisième couple formé du premier élément de pressage 103a, 103b et du deuxième élément de pressage 105a, 105b. L'invention couvre également l'appairage angulaire du premier élément de pressage 103a, 103b, du paquet de disques 101a, 101b, 102a, 102b et du deuxième élément de pressage 105a, 105b. Bien entendu, l'invention couvre un tel appairage angulaire pour un unique embrayage ou pour au moins deux embrayages, quand le module d'embrayage en comporte plusieurs.

Aussi, selon la première option, deux quelconques des points de débattements axiaux maximums sont disposés de manière diamétralement opposés l'un à l'autre par rapport à l'axe de rotation O. Autrement dit, le point de débattements axial maximum de l'un des composants est placé symétriquement à l'opposé du point de débattement axial maximum de l'autre composant du dispositif de transmission, par rapport à l'axe de rotation O.

Selon une autre alternative, deux des points de débattements axiaux minimums sont disposés de manière diamétralement opposés l'un à l'autre par rapport à l'axe de rotation O. Autrement dit, le point de débattements axial minimum de l'un des composants est placé symétriquement à l'opposé du point de débattement axial minimum de l'autre composant du dispositif de transmission, par rapport à l'axe de rotation O.

L'invention atteint le but qu'elle s'est fixé en permettant de limiter les efforts de traînée et/ou de réduire les efforts axiaux E1, E2 pour embrayer, et ainsi de pérenniser le module d'embrayage 10.

## Revendications

1. Procédé d'assemblage d'un module d'embrayage (10) d'un véhicule, le module d'embrayage (10) comprenant au moins un moyeu d'entrée de couple (130), un moyeu de sortie de couple (120a, 120b) et au moins un dispositif de transmission (20) destiné à accoupler le moyeu d'entrée de couple (130) avec le moyeu de sortie de couple (120a, 120b), le dispositif de transmission (20) comprenant au moins deux composants choisis parmi un paquet de disques (101a, 101b, 102a, 102b), un premier élément de pressage (103a, 103b) du paquet de disques (101a, 101b, 102a, 102b) ou un deuxième élément de pressage (105a, 105b) du paquet de disques (101a, 101b, 102a, 102b), procédé **caractérisé en ce que** :
- à une étape a), on détermine une position (Amax) d'un point de débattement axial maximum (Pmax) du premier élément de pressage (103a, 103b) choisi parmi au moins un des composants du dispositif de transmission (20) et qui est un voile de transmission de couple qui forme une butée axiale en contact avec le paquet de disques quand un effort axial est exercé par le deuxième élément de pressage,
- à une étape b), on détermine une position (Amax) d'un point de débattement axial maximum (Pmax) d'au moins un des autres composants du dispositif de transmission (20),
- à une étape c), on repère les points de débattement axiaux (Pmax) déterminés aux étapes a) et b),
- à une étape d), on assemble les composants du dispositif de transmission (20) en positionnant le point de débattement axial maximum (Pmax) du composant du dispositif de transmission (20) déterminé à l'étape a) par rapport au point de débattement axial maximum (Pmax) de l'autre composant du dispositif de transmission (20) déterminé à l'étape b), de manière à appairer angulairement le dispositif de transmission (20).

2. Procédé selon la revendication 1, au cours duquel à l'étape d), on positionne angulairement le point de débattement axial maximum (Pmax) du composant du dispositif de transmission (20) déterminé à l'étape a) à l'opposé du point de débattement axial maximum (Pmax) de l'autre composant du dispositif de transmission (20) déterminé à l'étape b) par rapport à un axe de rotation (O) du module d'embrayage (10).

3. Procédé selon la revendication 1, au cours duquel à l'étape a) et à l'étape b), on repère une position (Amin) d'un point de débattement axial minimum (Pmin) du composant du dispositif de transmission (20) considéré, et à l'étape d), on appaire angulairement le dispositif de transmission (20) en positionnant les points de débattement axiaux minimums (Pmin) l'un par rapport à l'autre.

4. Procédé selon la revendication 1 ou 3, au cours duquel, postérieurement à l'étape c), on marque les composants du dispositif de transmission (20) au niveau des points de débattements axiaux repérés (Pmax, Pmin).

5. Procédé selon l'une quelconque des revendications précédentes, au cours duquel le débattement axial est déterminé par une mesure prise entre une surface de référence du composant considéré et un point de contact du composant considéré sur le composant adjacent contre lequel il s'appuie.

6. Module d'embrayage (10) d'un véhicule destiné à accoupler un organe d'entrainement du véhicule avec une boîte de vitesses du véhicule et assemblé selon le procédé de la revendication 4, le module d'embrayage (10) comprenant au moins un moyeu d'entrée de couple (130), un moyeu de sortie de couple (120a, 120b) et au moins un dispositif de transmission (20) destiné à accoupler le moyeu d'entrée de couple (130) avec le moyeu de sortie (120a, 120b), le dispositif de transmission comprenant au moins deux composants choisis parmi un paquet de disques (101a, 101b, 102a, 102b), un premier élément de pressage (105a, 105) du paquet de disques (101a, 101b, 102a, 102b) ou un deuxième élément de pressage (103a, 103b) du paquet de disques (101a, 101b, 102a, 102b), **caractérisé en ce qu'**au moins deux composants du dispositif de transmission (20) comprennent chacun une marque (122, 124, 127, 128) et **en ce que** ces deux marques (122, 124, 127, 128) sont disposées l'une par rapport à l'autre de manière à appairer angulairement le dispositif de transmission (20).

7. Module d'embrayage (10) selon la revendication 6, dans lequel le module d'embrayage (10) comprend au moins un embrayage (100a, 100b) comportant au moins le paquet de disques (101a, 101b, 102a, 102b) axialement interposé entre le premier élément de pressage (103a, 103b) et le deuxième élément de pressage (105a, 105b).

8. Module d'embrayage (10) selon la revendication précédente, dans lequel au moins une des marques (122, 124) est ménagée sur le premier élément de pressage (103a, 103b) et en ce qu'au moins une autre des marques (127, 128) est ménagée sur le deuxième élément de pressage (105a, 105b).

9. Module d'embrayage (10) selon l'une quelconque des revendications 7 ou 8, dans lequel au moins une des marques (122, 124) est ménagée sur le premier élément de pressage (103a, 103b) ou sur le deuxième élément de pressage (105a, 105b) et en ce qu'au moins une autre des marques (127, 128) est ménagée sur le paquet de disques (101a, 101b, 102a, 102b).

10. Module d'embrayage (10) selon l'une quelconque des revendications 6 à 9, dans lequel le module d'embrayage (10) comprend un premier embrayage (100a) et un deuxième embrayage (100b) qui s'étend radialement au moins en partie à l'intérieur du premier embrayage (100a), le premier embrayage (100a) et le deuxième embrayage (100b) comprenant chacun au moins le paquet de disques (101a, 101b, 102a, 102b) axialement interposé entre le premier élément de pressage (103a, 103b) et le deuxième élément de pressage (105a, 105b).

11. Module d'embrayage (10) selon l'une quelconque des revendications 6 à 10, dans lequel le premier élément de pressage (103a, 103b) et le deuxième élément de pressage (105a, 105b) comprennent chacun une zone d'appui (114, 126, 161) sur le paquet de disques et une surface de référence (123, 131), la marque (122, 124, 127, 128) du premier élément de pressage et/ou du deuxième élément de pressage repérant un point de débattement axial maximal (Pmax) ou minimal (Pmin) mesuré entre la surface de référence et la zone d'appui.

12. Module d'embrayage (10) selon la revendication précédente, dans lequel la zone d'appui du premier élément de pressage (103a, 103b) et la zone d'appui du deuxième élément de pressage (105a, 105b) sont circulaires et disposées sensiblement sur un même diamètre.

13. Module d'embrayage (10) selon l'une quelconque des revendications 6 à 12, dans lequel le premier élément de pressage (103a) est un voile de transmission de couple et le deuxième élément de pressage (105a) est un piston d'actionnement.

14. Module d'embrayage (10) selon l'une quelconque des revendications 6 à 12, dans lequel le premier élément de pressage (103b) est un flasque de reprise d'effort axial et le deuxième élément de pressage (105b) est un piston d'actionnement.

15. Module d'embrayage (10) selon l'une quelconque des revendications 6 à 14, dans lequel les deux marques (122, 124, 127, 128) sont positionnées angulairement en opposition par rapport à l'axe de rotation (O) du module d'embrayage, selon un angle de 180° compris dans une tolérance de plus ou moins 60°, de préférence dans une tolérance de plus ou moins 30°.

## Patentansprüche

1. Verfahren zum Zusammenbau eines Kupplungsmoduls (10) eines Fahrzeugs, wobei das Kupplungsmodul (10) mindestens eine Drehmomenteingangsnabe (130), eine Drehmomentausgangsnabe (120a, 120b) und mindestens eine Übertragungsvorrichtung (20) zum Koppeln der Drehmomenteingangsnabe (130) mit der Drehmomentausgangsnabe (120a, 120b) umfasst, wobei die Übertragungsvorrichtung (20) mindestens zwei Komponenten umfasst, die aus einem Scheibenpaket (101a, 101b, 102a, 102b), einem ersten Presselement (103a, 103b) des Scheibenpakets (101a, 101b, 102a, 102b) oder ein zweites Presselement (105a, 105b) des Lamellenpakets (101a, 101b, 102a, 102b) umfasst, **dadurch gekennzeichnet, dass**:
- in einem Schritt a) eine Position (Amax) eines Punktes maximaler axialer Auslenkung (Pmax) des ersten Presselements (103a, 103b) bestimmt wird, das aus mindestens einem der Bauteile der Übertragungsvorrichtung (20) ausgewählt ist und eine Drehmomentübertragungswand ist, die einen axialen Anschlag bildet, der mit dem Scheibenpaket in Kontakt steht, wenn eine axiale Kraft durch das zweite Presselement ausgeübt wird,
- In einem Schritt b) wird eine Position (Amax) eines Punktes maximaler axialer Auslenkung (Pmax) mindestens eines der anderen Bauteile der Übertragungsvorrichtung (20) bestimmt.
- in einem Schritt c) werden die in den Schritten a) und b) bestimmten axialen Auslenkpunkte (Pmax) markiert,
- In einem Schritt d) werden die Komponenten der Übertragungsvorrichtung (20) zusammengebaut, indem der in Schritt a) bestimmte maximale axiale Auslenkungspunkt (Pmax) der Komponente der Übertragungsvorrichtung (20) in Bezug auf den in Schritt b) bestimmten maximalen axialen Auslenkungspunkt (Pmax) des anderen Bauteils der Übertragungsvorrichtung (20) positioniert, so dass die Übertragungsvorrichtung (20) winkelrecht zueinander ausgerichtet ist.

2. Verfahren nach Anspruch 1, bei dem in Schritt d) der in Schritt a) ermittelte Punkt der maximalen axialen Auslenkung (Pmax) des Bauteils der Übertragungsvorrichtung (20) gegenüber dem in Schritt b) ermittelten Punkt der maximalen axialen Auslenkung (Pmax) des anderen Bauteils der Übertragungs vorrichtung (20) in Bezug auf eine Drehachse (O) des Kupplungsmoduls (10) winklig positioniert wird (10).

3. Verfahren nach Anspruch 1, bei dem in Schritt a) und Schritt b) eine Position (Amin) eines axialen minimalen Auslenkungspunktes (Pmin) des betreffenden Bauteils der Übertragungsvorrichtung (20) markiert wird und in Schritt d) wird die Übertragungsvorrichtung (20) winklig aufeinander abgestimmt, indem die axialen minimalen Auslenkungspunkte (Pmin) relativ zueinander positioniert werden.

4. Verfahren nach Anspruch 1 oder 3, bei dem nach Schritt c) die Bauteile der Übertragungsvorrichtung (20) an den ermittelten axialen Auslenkungsstellen (Pmax, Pmin) markiert werden.

5. Verfahren nach einem der vorstehenden Ansprüche, bei dem die axiale Auslenkung durch eine Messung zwischen einer Referenzfläche des betreffenden Bauteils und einem Kontaktpunkt des betreffenden Bauteils an dem benachbarten Bauteil, an dem es anliegt, bestimmt wird.

6. Kupplungsmodul (10) eines Fahrzeugs zum Koppeln eines Antriebsorgans des Fahrzeugs mit einem Getriebe des Fahrzeugs, das nach dem Verfahren des Anspruchs 4 zusammengebaut ist, wobei das Kupplungsmodul (10) mindestens eine Drehmomenteingangsnabe (130), eine Drehmomentausgangsnabe (120a, 120b) und mindestens eine Übertragungsvorrichtung (20) umfasst, die dazu bestimmt ist, die Drehmomenteingangsnabe (130) mit der Ausgangsnabe (120a, 120b) zu koppeln, wobei die Übertragungsvorrichtung mindestens zwei Komponenten umfasst, die aus einem Scheibenpaket (101a, 101b, 102a, 102b), einem ersten Presselement (105a, 105) des Scheibenpakets (101a, 101b, 102a, 102b) oder ein zweites Druckelement (103a, 103b) des Lamellenpakets (101a, 101b, 102a, 102b) umfasst, **dadurch gekennzeichnet, dass** mindestens zwei Komponenten der Übertragungsvorrichtung (20) jeweils eine Markierung (122, 124, 127, 128) und dass diese beiden Markierungen (122, 124, 127, 128) so zueinander angeordnet sind, dass sie die Übertragungsvorrichtung (20) winkelmäßig paarweise zuordnen.

7. Kupplungsmodul (10) nach Anspruch 6, wobei das Kupplungsmodul (10) mindestens eine Kupplung (100a, 100b) mit mindestens dem Lamellenpaket (101a, 101b, 102a, 105b) umfasst.

8. Kupplungsmodul (10) nach dem vorherigen Anspruch, wobei mindestens eine der Markierungen (122, 124) auf dem ersten Druckelement (103a, 103b) ausgebildet ist und dass mindestens eine weitere der Markierungen (127, 128) auf dem zweiten Presselement (105a, 105b) ausgebildet ist.

9. Kupplungsmodul (10) nach einem der Ansprüche 7 oder 8, wobei mindestens eine der Markierungen (122, 124) auf dem ersten Druckelement (103a, 103b) oder am zweiten Druckelement (105a, 105b) angeordnet ist und dass mindestens eine weitere der Markierungen (127, 128) am Lamellenpaket (101a, 101b, 102a, 102b) angeordnet ist.

10. Kupplungsmodul (10) nach einem der Ansprüche 6 bis 9, wobei das Kupplungsmodul (10) eine erste Kupplung (100a) und eine zweite Kupplung (100b) umfasst, die sich zumindest teilweise radial innerhalb der ersten Kupplung (100a) erstreckt, wobei die erste Kupplung (100a) und die zweite Kupplung (100b) jeweils mindestens das Scheibenpaket (101a, 101b, 102a, 102b), die axial zwischen dem ersten Druckelement (103a, 103b) und dem zweiten Druckelement (105a, 105b) angeordnet sind.

11. Kupplungsmodul (10) nach einem der Ansprüche 6 bis 10, wobei das erste Druckelement (103a, 103b) und das zweite Druckelement (105a, 105b) jeweils eine Anlagefläche (114, 126, 161) an der Lamellenpakete und eine Referenzfläche (123, 131) aufweisen, wobei die Markierung (122, 124, 127, 128) des ersten und/oder des zweiten Druckelements einen maximalen (Pmax) oder minimalen (Pmin) axialen Auslenkungspunkt markiert, der zwischen der Bezugsfläche und dem Auflagebereich gemessen wird.

12. Kupplungsmodul (10) nach dem vorherigen Anspruch, wobei der Auflagebereich des ersten Druckelements (103a, 103b) und der Auflagebereich des zweiten Druckelements (105a, 105b) kreisförmig sind und im Wesentlichen auf demselben Durchmesser angeordnet sind.

13. Kupplungsmodul (10) nach einem der Ansprüche 6 bis 12, wobei das erste Druckelement (103a) eine Drehmomentübertragungsplatte und das zweite Druckelement (105a) ein Betätigungskolben ist.

14. Kupplungsmodul (10) nach einem der Ansprüche 6 bis 12, wobei das erste Druckelement (103b) ein Axialkraft-Aufnahmeflansch ist und das zweite Druckelement (105b) ein Betätigungskolben ist.

15. Kupplungsmodul (10) nach einem der Ansprüche 6 bis 14, wobei die beiden Markierungen (122, 124, 127, 128) gegenüber der Drehachse (O) des Kupplungsmoduls in einem Winkel von 180° innerhalb einer Toleranz von plus oder minus 60°, vorzugsweise innerhalb einer Toleranz von plus oder minus 30°, winklig gegenüberliegen.

## Claims

1. Method for assembling a vehicle clutch module (10), the clutch module (10) comprising at least one torque input hub (130), a torque output hub (120a, 120b) and at least one transmission device (20) for coupling the torque input hub (130) to the torque output hub (120a, 120b), the transmission device (20) comprising at least two components selected from a disc pack (101a, 101b, 102a, 102b), a first pressing element (103a, 103b) of the disc pack (101a, 101b, 102a, 102b) or a second pressing element (105a, 105b) of the disc pack (101a, 101b, 102a, 102b), **characterized in that**:
- in step a), a position (Amax) of a point of maximum axial displacement (Pmax) of the first pressing element (103a, 103b) selected from at least one of the components of the transmission device (20) and which is a torque transmission plate forming an axial stop in contact with the disc pack when an axial force is exerted by the second pressing element,
- in step b), a position (Amax) of a maximum axial displacement point (Pmax) of at least one of the other components of the transmission device (20) is determined,
- in step c), the axial deflection points (Pmax) determined in steps a) and b) are marked,
- in step d), the components of the transmission device (20) are assembled by positioning the maximum axial deflection point (Pmax) of the component of the transmission device (20) determined in step a) relative to the maximum axial deflection point (Pmax) of the other component of the transmission device (20) determined in step b), so as to angularly align the transmission device (20).

2. Method according to claim 1, in which, in step d), the point of maximum axial displacement (Pmax) of the transmission device component (20) determined in step a) is positioned at an angle opposite to the point of maximum axial displacement (Pmax) of the other transmission device component (20) determined in step b) with respect to a rotation axis (O) of the clutch module (10).

3. Method according to claim 1, in which, in step a) and step b), a position (Amin) of a minimum axial displacement point (Pmin) of the component of the transmission device (20) under consideration is marked, and in step d), the transmission device (20) is angularly paired by positioning the minimum axial deflection points (Pmin) relative to each other.

4. Method according to claim 1 or 3, in which, after step c), the components of the transmission device (20) are marked at the identified axial displacement points (Pmax, Pmin).

5. Method according to any of the preceding claims, in which the axial displacement is determined by a measurement taken between a reference surface of the component in question and a contact point of the component in question on the adjacent component against which it rests.

6. Clutch module (10) for a vehicle, intended to couple a drive member of the vehicle to a gearbox of the vehicle and assembled according to the method of claim 4 , the clutch module (10) comprising at least one torque input hub (130), a torque output hub (120a, 120b) and at least one transmission device (20) for coupling the torque input hub (130) to the output hub (120a, 120b), the transmission device comprising at least two components selected from a disc pack (101a, 101b, 102a, 102b), a first pressing element (105a, 105) of the disc pack (101a, 101b, 102a, 102b) or a second pressing element (103a, 103b) of the disc pack (101a, 101b, 102a, 102b), **characterised in that** at least two components of the transmission device (20) each comprise a mark (122, 124, 127, 128) and **in that** these two marks (122, 124, 127, 128) are arranged relative to each other in such a way as to angularly align the transmission device (20).

7. Clutch module (10) according to claim 6, wherein the clutch module (10) comprises at least one clutch (100a, 100b) having at least the disc pack (101a, 101b, 102a, 102b) axially interposed between the first pressing element (103a, 103b) and the second pressing element (105a, 105b).

8. Clutch module (10) according to the preceding claim, wherein at least one of the markings (122, 124) is provided on the first pressing element (103a, 103b) and at least one other of the markings (127, 128) is provided on the second pressing element (105a, 105b).

9. Clutch module (10) according to any of claims 7 or 8, wherein at least one of the markings (122, 124) is provided on the first pressing element (103a, 103b) or on the second pressing element (105a, 105b) and in that at least one other of the markings (127, 128) is provided on the disc pack (101a, 101b, 102a, 102b).

10. Clutch module (10) according to any of claims 6 to 9, wherein the clutch module (10) comprises a first clutch (100a) and a second clutch (100b) which extends radially at least partly inside the first clutch (100a), the first clutch (100a) and the second clutch (100b) each comprising at least the disc pack (101a, 101b, 102a, 102b) axially interposed between the first pressure element (103a, 103b) and the second pressure element (105a, 105b).

11. Clutch module (10) according to any of claims 6 to 10, wherein the first pressure element (103a, 103b) and the second pressing element (105a, 105b) each comprise a bearing area (114, 126, 161) on the disc pack and a reference surface (123, 131), the mark (122, 124, 127, 128) of the first pressing element and/or the second pressing element marking a point of maximum (Pmax) or minimum (Pmin) axial deflection measured between the reference surface and the bearing area.

12. Clutch module (10) according to the previous claim, wherein the bearing area of the first pressing element (103a, 103b) and the bearing area of the second pressing element (105a, 105b) are circular and arranged substantially on the same diameter.

13. Clutch module (10) according to any of claims 6 to 12, wherein the first pressure element (103a) is a torque transmission plate and the second pressure element (105a) is an actuating piston.

14. Clutch module (10) according to any of claims 6 to 12, wherein the first pressing element (103b) is an axial force bearing flange and the second pressing element (105b) is an actuating piston.

15. Clutch module (10) according to any of claims 6 to 14, wherein the two marks (122, 124, 127, 128) are positioned angularly opposite each other with respect to the axis of rotation (O) of the clutch module, at an angle of 180° within a tolerance of plus or minus 60°, preferably within a tolerance of plus or minus 30°.
